# FASCICULE DE BREVET EUROPEEN

(11) **EP 2 299 454 B1**
(45) Date de publication et mention de la délivrance du brevet: **31.07.2013**
(21) Numéro de dépôt: 10167560.1
(22) Date de dépôt: 28.06.2010
(51) Int. Cl.: H01B 7/32, G02B 6/44, G01R 31/02

(54) **Câble comprenant des moyens de détection aptes à détecter la présence d'un corps électriquement conducteur extérieur au câble**
Kabel mit Mitteln zur Detektion von elektrisch leitenden Körpern außerhalb des Kabels
Cable including means for detecting the presence of an electrically conducting body outside the cable

(30) Priorité: 01.07.2009 FR 0954479
(43) Date de publication de la demande: 23.03.2011
(73) Titulaire: Nexans, 75008 Paris (FR)
(72) Inventeur: GUILLAUMOND, François-Xavier, 62300, LENS (FR)
(74) Mandataire: Peguet, Wilfried

(56) Documents cités:
- EP-A- 0 317 101
- DE-A1- 3 338 232
- DE-A1- 19 542 006
- DE-A1-102006 029 203
- JP-A- 2007 200 685
- SOUTHWIRE COMPANY: "T&D UPDATE, Slender Sheaths Put Underground HV on a Diet" INTERNET CITATION, [Online] 1 janvier 2006 (2006-01-01), pages 1-4, XP002541324 Extrait de l'Internet: URL:http://www.southwire.com/processChanne l.do?channelId=f0fdae48de66b010 VgnVCM1000002702a8c0RCRD> [extrait le 2009-08-21]
- SOUTHWIRE COMPANY: "High Voltage Product Catalog 69kV-230kV" INTERNET CITATION, [Online] 20 décembre 2007 (2007-12-20), pages 60-68, XP002541323 Extrait de l'Internet: URL:http://www.southwire.com> [extrait le 2009-08-21]

## Description

La présente invention se rapporte à un câble comprenant des moyens de détection aptes à détecter la présence d'un corps électriquement conducteur extérieur au câble.

Il existe de nombreux moyens pour détecter la présence d'un corps extérieur au câble tel qu'un solvant ou un objet pointu par exemple.

On peut citer le document EP 0 391 580 qui présente des moyens de détection permettant de détecter la présence d'un solvant à l'intérieur d'un câble. Les moyens de détection sont du type couche composite, cette couche composite étant entourée par une gaine extérieure de protection en un matériau électriquement isolant. Ladite couche composite comprend des bandes conductrices incorporées dans un matériau plastique, ladite couche étant recouverte d'une encre conductrice disposée en lignes parallèles. Cette encre conductrice, comportant des charges conductrices, est soluble dans un ou plusieurs solvants de sorte à se dissoudre lorsqu'elle est en contact avec le ou les solvants en question. Par conséquent, cela permet de détecter un changement du signal électrique entre ces lignes lorsque par exemple les charges conductrices de l'encre conductrice d'une ligne dissoute se retrouvent en contact avec une des lignes adjacentes.

Le document EP 0 317 101 propose quant à lui une solution pour détecter la présence d'un objet pointu, non nécessairement conducteur, ayant traversé les couches isolantes d'un câble. Plus particulièrement, les moyens de détection comprennent une première couche électriquement conductrice entourée par une couche électriquement isolante, cette dernière étant elle-même entourée par une deuxième couche électriquement conductrice. Les couches conductrices ainsi que la couche électriquement isolante sont entourées par une gaine extérieure de protection en un matériau électriquement isolant. Les deux couches électriquement conductrices se composent d'un matériau fibreux de façon à ce que, lorsqu'un objet pointu traverse les différentes couches du câble, y compris la gaine extérieure de protection, jusqu'à atteindre la première couche électriquement conductrice, il entraîne des fragments du matériau fibreux de la deuxième couche électriquement conductrice vers la première couche électriquement conductrice en passant par la couche électriquement isolante.

Toutefois, ces deux types de détection visent à détecter la présence d'un corps conducteur extérieur (ou étranger) au câble uniquement lorsqu'il se trouve à l'intérieur dudit câble, c'est-à-dire lorsqu'il a traversé de part et d'autre la gaine extérieure et se trouve notamment en contact avec les conducteurs isolés. Ainsi, lorsque la détection a lieu, il se peut que ces câbles ne puissent déjà plus remplir leurs fonctions à cause des risques non négligeables de dommages des conducteurs électriquement isolés qui les composent.

En outre, ces deux types de moyens de détection sont des systèmes dits consommables. En effet, une fois la détection effectuée, ils ne sont plus réutilisables en l'espèce puisque les moyens de détection ont été modifiés de façon irréversible du fait de leur dénaturation par le corps étranger.

Le but de la présente invention est de pallier les inconvénients des techniques de l'art antérieur en proposant notamment un câble comportant des moyens de détection réutilisables, fiables et qui offrent une détection limitant, voire évitant, les risques de dommages du ou des éléments constitutifs du câble entouré(s) par la gaine extérieure, par un corps extérieur.

La présente invention a pour objet un câble comprenant au moins un ou plusieurs conducteurs électriquement isolés entouré(s) par une gaine extérieure électriquement isolante, et des moyens de détection comprenant au moins un premier et un deuxième éléments électriquement conducteurs, lesdits moyens de détection étant aptes à détecter la présence d'un corps électriquement conducteur extérieur au câble en contact avec les deux éléments électriquement conducteurs, **caractérisé en ce qu**'au moins un des éléments électriquement conducteurs est en contact avec la surface externe de la gaine extérieure.

On entend par « câble » tout câble d'énergie et/ou de télécommunication » tel que les câbles électriques et/ou optiques, destinés au transport d'énergie et/ou à la transmission de données. Ce type de câble comprend un ou plusieurs conducteurs électriquement isolés entouré(s) par ladite gaine extérieure, le ou les conducteurs étant du type électrique et/ou optique.

On entend également par « câble » tout câble comprenant un ou plusieurs tubes transmetteurs de fluides entouré(s) par ladite gaine extérieure.

Le terme « conducteur » ou « conductrice » utilisé dans la présente invention doit être également compris comme signifiant « semi-conducteur » ou « semi-conductrice ».

Le « contact » entre l'élément électriquement conducteur et la surface externe de la gaine extérieure est de préférence un contact direct, sans matériau intermédiaire entre ledit élément et ladite surface externe. Ceci étant, un matériau intermédiaire de type adhésif (e.g. polymère fusible) permettant d'améliorer ou de garantir l'adhésion entre l'élément électriquement conducteur et la surface externe de la gaine extérieure peut être utilisé.

Le corps électriquement conducteur extérieur (ou étranger) au câble peut être par exemple :
- un liquide conducteur tel que de l'eau, un solvant, ou un objet rendu conducteur par la présence d'un liquide conducteur telle qu'une écharde en bois humidifiée,
- un objet pointu conducteur tel qu'un clou métallique ou une écharde métallique et/ou
- des particules conductrices telles que des poussières de carbone ou de cuivre.

La présente invention offre avantageusement un câble comportant des moyens de détection permanents, intégrés et réutilisables.

En outre, le câble de l'invention permet de détecter la présence d'un corps conducteur étranger audit câble bien avant qu'il ne pénètre à l'intérieur ou au coeur du câble. Par exemple, lorsque le câble est un câble d'énergie et/ou de télécommunication, il permet de détecter la présence d'un corps conducteur étranger audit câble bien avant que ledit corps ne soit en contact direct avec le ou les conducteurs électriquement isolés qui compose ledit câble. Ainsi, lesdits moyens de détection permettent de garantir l'intégrité des conducteurs électriquement isolés entourés par la gaine extérieure du câble.

Les éléments électriquement conducteurs peuvent être tout type de matériau bien connu de l'homme du métier, de préférence facilement mis en forme par des techniques classiques d'extrusion, seul ou en association.

Plus particulièrement, ils sont de préférence à base d'un matériau polymérique comprenant une quantité de charges conductrices (ou semiconductrices) suffisante pour obtenir un élément électriquement conducteur (ou semi-conducteur), et ainsi former un « matériau polymérique chargé ». A titre d'exemple, le matériau polymérique est un polymère thermoplastique ou élastomère, et la charge conductrice (ou semi-conductrice) est du noir de carbone.

Afin de faciliter l'adhésion du ou des éléments électriquement conducteurs sur la surface de la gaine extérieure, il est préférable que le matériau polymérique de l'élément électriquement conducteur soit de la même nature que le matériau polymérique utilisé pour la fabrication de la gaine extérieure. Ainsi, par exemple, lorsque la gaine extérieure est à base de polyéthylène, le matériau polymérique de l'élément électriquement conducteur est du polyéthylène ; lorsque la gaine extérieure est à base de polychlorure de vinyle (PCV), le matériau polymérique de l'élément électriquement conducteur est du PCV ; ou lorsque la gaine extérieure est à base de polyuréthane (PU), le matériau polymérique de l'élément électriquement conducteur est du PU.

Les éléments électriquement conducteurs peuvent également être des vernis conducteurs ou des encres conductrices appliqués sur la surface de la gaine extérieure.

Dans un autre exemple de matériau, les éléments électriquement conducteurs peuvent être un matériau métallique ou en alliage de métaux.

On peut également citer les matériaux composites tels que par exemple un matériau polymérique, comprenant ou non des charges conductrices, dans lequel sont incorporés des fils métalliques.

De préférence, l'épaisseur du ou des éléments électriquement conducteurs est la plus fine possible, notamment d'au plus 2 millimètres, et de façon particulièrement préférée d'au plus 1 millimètre. L'avantage d'avoir une épaisseur fine réside dans le fait que les propriétés mécaniques et électriques de la gaine extérieure ne sont pas altérées par l'ajout du ou des éléments électriquement conducteurs sur la surface externe de la gaine extérieure.

Dans un premier mode de réalisation, au moins le premier et le deuxième éléments électriquement conducteurs sont en contact avec la surface externe de la gaine extérieure. De préférence, au moins le premier et le deuxième éléments électriquement conducteurs sont disposés sur la surface externe de la gaine extérieure et s'étendent parallèlement entre eux le long du câble.

Ainsi, les au moins deux éléments électriquement conducteurs sont en contact avec la surface externe de la gaine extérieure.

Le premier et le deuxième éléments électriquement conducteurs sont parallèles entre eux, ce qui permet de garder une consigne de détection constante et d'obtenir une détection répétable le long du câble.

Le câble décrit dans ce premier mode de réalisation est plus particulièrement destiné à la détection de la présence d'un liquide conducteur, telle que par exemple à la détection d'eau lors d'une inondation. Lorsque le câble comporte des conducteurs électriquement isolés, ces derniers restent intègres à l'intérieur du câble puisque la détection du liquide s'effectue dès que ce dernier se trouve en contact avec au moins deux éléments électriquement conducteurs situés sur le pourtour externe de la gaine extérieure.

Par ailleurs, le câble décrit dans ce premier mode de réalisation peut également être destiné à la détection de particules conductrices telles que par exemple des poussières de carbone ou de cuivre. Cela permet par exemple d'éviter, en détectant la présence d'une accumulation desdites particules sur la surface externe de la gaine extérieure du câble, tout risque de court-circuit des organes électriques (e.g. contacteur électrique) avoisinant le câble.

De plus, les moyens de détection de ce premier mode de réalisation sont faciles à mettre en oeuvre puisqu'ils peuvent être installés sur des câbles existants comportant une gaine extérieure. Les câbles existants peuvent alors être modifiés de façon simple et économique par simple déposition des éléments électriquement conducteurs sur la surface externe de la gaine extérieure desdits câbles.

Dans ce premier mode de réalisation, chacun des éléments électriquement conducteurs, qu'ils soient au nombre de deux ou plus, est en contact avec la surface externe de la gaine extérieure.

En outre, la distance entre deux éléments électriquement conducteurs est sensiblement constante le long du câble. Toutefois, cette distance peut bien entendu varier entre chaque paire d'éléments électriquement conducteurs.

A titre de mode de réalisation particulier, chacun des éléments électriquement conducteurs est une bande conductrice.

Dans une première variante, les bandes conductrices s'étendent le long du câble, parallèlement à l'axe longitudinal du câble.

Lorsque le câble est immergé dans un liquide conducteur, par exemple de l'eau lors d'une inondation, ou bien entouré sur toute sa périphérie par des particules métalliques, deux bandes conductrices sont suffisantes pour détecter ledit liquide ou lesdites particules, quelque soit la largeur des bandes et la distance entre les deux bandes conductrices.

Pour optimiser la détection d'un corps étranger conducteur en contact avec le pourtour externe de la gaine extérieure, il est préférable d'avoir un nombre d'éléments électriquement conducteurs supérieur ou égale à trois. Ainsi, la moindre présence d'un corps conducteur étranger avec la gaine extérieure peut être facilement détectée.

Dans une deuxième variante, les bandes conductrices sont enroulées autour de la gaine extérieure le long du câble, notamment selon une spirale à direction constante ou en enroulement de type S-Z.

Dans ce cas, et pour optimiser la détection d'un corps étranger conducteur en contact avec le pourtour externe de la gaine extérieure, le nombre d'éléments électriquement conducteurs peut être limité à deux si le pas d'enroulement des deux éléments électriquement conducteurs est faible. Ainsi, la moindre présence d'un corps conducteur étranger avec la gaine extérieure peut être facilement détectée.

Les bandes conductrices sont de préférence obtenues à partir d'un matériau polymérique chargé extrudé sur la surface externe de la gaine extérieure ; d'un matériau métallique ou en alliage de métaux, ou d'un matériau composite déposé sur la surface externe de la gaine extérieure ; d'un vernis conducteur ou d'une encre conductrice appliquée sur la surface externe de la gaine extérieure.

L'extrusion du matériau polymérique chargé peut en outre être effectuée concomitamment à l'extrusion du matériau (polymérique) de la gaine extérieure à travers la même filière d'une extrudeuse, et former ainsi des bandes intégrées ou incorporées à la gaine extérieure, toujours en contact avec la surface externe de cette dernière.

Dans un deuxième mode de réalisation, le premier élément électriquement conducteur est entouré par la gaine extérieure, cette dernière étant elle-même entourée par le deuxième élément électriquement conducteur, la gaine extérieure étant en contact avec le premier et le deuxième éléments électriquement conducteurs.

Le câble décrit dans ce deuxième mode de réalisation est plus particulièrement destiné à la détection de la présence d'un corps électriquement conducteur traversant les épaisseurs respectives du deuxième élément électriquement conducteur et de la gaine extérieure pour venir en contact avec le premier élément électriquement conducteur. De ce fait, le corps électriquement conducteur peut être par exemple un objet pointu conducteur tel qu'un clou métallique ou une écharde métallique, ou bien un objet rendu conducteur par la présence d'un liquide conducteur tel qu'une écharde en bois humidifiée.

Ainsi, la détection de l'objet conducteur pointu s'effectue dès que ce dernier se trouve en contact avec les deux éléments électriquement conducteurs situés de part et d'autre de la gaine extérieure, ce qui permet de limiter, voire d'éviter d'endommager les éléments constitutifs du câble entourés par la gaine extérieure.

De plus, les moyens de détection de ce deuxième mode de réalisation sont faciles à mettre en oeuvre puisqu'ils peuvent être installés sur des câbles existants comportant notamment une couche d'un composé métallique tel qu'un écran en métal directement recouvert par une gaine extérieure. Les câbles existants peuvent alors être modifiés de façon simple et économique par simple déposition du deuxième élément électriquement conducteur sur la surface externe de la gaine extérieure desdits câbles.

Plus particulièrement, chacun des éléments électriquement conducteurs est une couche conductrice recouvrant en continu la surface de la gaine extérieure. Ainsi, le premier élément électriquement conducteur (ou « première couche conductrice ») recouvre la surface interne de la gaine extérieure, et le deuxième élément électriquement conducteur (ou « deuxième couche conductrice ») recouvre la surface externe de la gaine extérieure.

La première couche et/ou la deuxième couche conductrice(s) sont de nature identique ou différente, et peuvent être des matériaux choisies indifféremment parmi des matériaux polymériques chargés, des matériaux métalliques ou en alliage de métaux, des vernis conducteurs, des encres conductrices, et des matériaux composites.

Ainsi, on peut envisager différentes combinaisons telles que par exemple :
- la première et la deuxième couches conductrices sont des couches extrudées d'un matériau polymérique chargé, ou bien
- la première couche conductrice est une couche d'un matériau métallique tel qu'un treillis en métal (ou écran métallique) et la deuxième couche conductrice est une couche extrudée d'un matériau polymérique chargé, ou une couche d'un vernis conducteur ou d'une encre conductrice.

Un autre objet de l'invention concerne un dispositif de détection, **caractérisé en ce qu**'il comprend :
- un câble conforme à la présente invention, tel que défini ci-avant, et
- des moyens de mesure de résistance ohmique entre les au moins deux éléments électriquement conducteurs, lesdits moyens étant reliés aux éléments électriquement conducteurs.

Ce dispositif peut comprendre en outre des moyens d'ajustement du seuil de détection couplés à un signal d'avertissement tel qu'une alarme sonore ou visuelle permettant ainsi d'alerter l'utilisateur dudit dispositif que la résistance ohmique entre les éléments électriquement conducteurs a évolué au-dessus d'une valeur seuil de détection prédéterminée. Ces moyens d'ajustement du seuil de détection peuvent également être couplés à un système d'interruption automatique de l'alimentation du câble lorsque ce dernier comporte un ou plusieurs conducteurs électriquement isolés. Cela permet ainsi d'éviter les conséquences du changement du milieu environnant le câble.

D'autres caractéristiques et avantages de la présente invention apparaîtront à la lumière des exemples qui vont suivre en référence aux figures annotées, lesdits exemples et figures étant donnés à titre illustratif et nullement limitatif.
La figure la illustre une vue schématique en perspective d'un câble comportant des moyens de détection selon une première variante d'un premier mode de réalisation conforme à l'invention.
La figure 1b illustre une vue schématique en perspective d'un câble comportant des moyens de détection selon une deuxième variante du premier mode de réalisation conforme à l'invention.
La figure 1c illustre une vue schématique en perspective d'un câble comportant des moyens de détection selon une troisième variante du premier mode de réalisation conforme à l'invention.
La figure 2 illustre une vue schématique en perspective d'un câble comportant des moyens de détection selon un deuxième mode de réalisation conforme à l'invention.

Pour des raisons de clarté, les mêmes éléments ont été désignés par des références identiques. De même, seuls les éléments essentiels pour la compréhension de l'invention ont été représentés de manière schématique, et ceci sans respect de l'échelle.

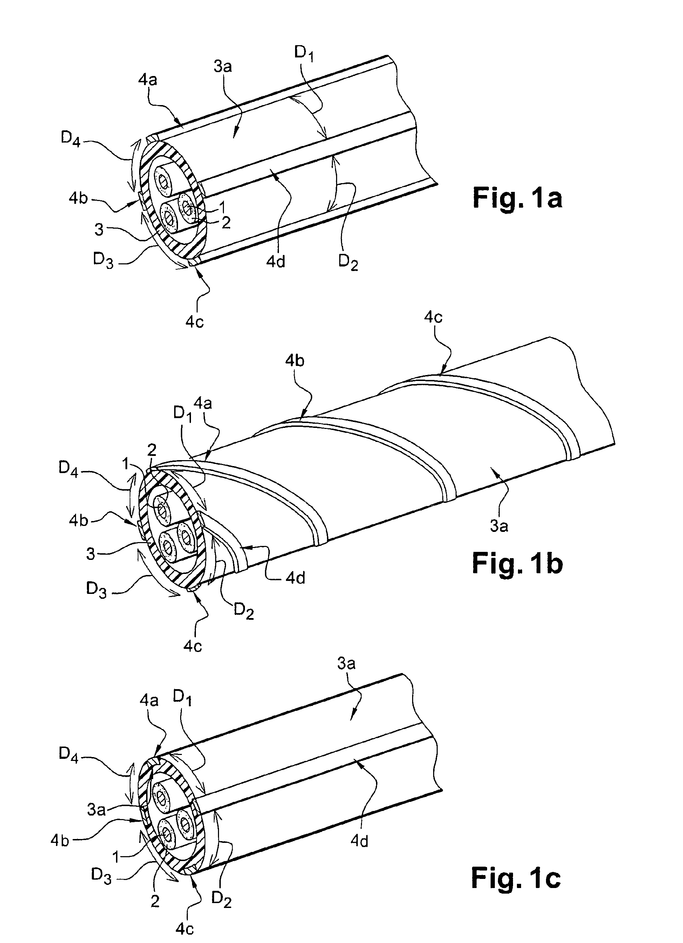

Selon un premier mode de réalisation, les figures 1a, 1b et 1c représentent schématiquement un câble d'énergie comprenant trois conducteurs électriques 1 recouverts par une couche 2 électriquement isolante. L'ensemble de ces trois conducteurs électriquement isolés est entouré par une gaine extérieure 3 électriquement isolante. En outre, les câbles représentés sur ces trois figures comportent plusieurs bandes 4a, 4b, 4c et 4d électriquement conductrices, positionnées directement en contact physique sur la surface externe 3a de la gaine extérieure 3. Ainsi, ces bandes s'étendent de façon continue sur la surface externe de la gaine extérieure pour assurer la continuité de détection le long du câble. Ces bandes forment alors des moyens de détection conforme à l'invention.

Sur les figures 1a, 1b et 1c, ces bandes sont au nombre de quatre et s'étendent longitudinalement le long du câble, parallèlement les unes aux autres, ou en d'autres termes la distance D entre deux bandes est sensiblement constante le long du câble, les distances D1, D2, D3, et D4 pouvant être identiques ou différents les uns des autres.

Selon une première variante telle que représentée sur la figure 1a, l'épaisseur de la gaine extérieur 3 est sensiblement constante. Les bandes 4a, 4b, 4c et 4d sont parallèles à l'axe longitudinal du câble. Plus particulièrement, puisque le câble présente schématiquement une coupe transversale circulaire, les bandes 4a, 4b, 4c et 4d sont parallèles à l'axe de symétrie du câble.
La figure 1b illustre une deuxième variante des moyens de détection de ce premier mode de réalisation. L'épaisseur de la gaine extérieure 3 est également sensiblement constante. Les bandes 4a, 4b, 4c et 4d sont enroulées ou torsadées autour de la gaine extérieure 3. Plus particulièrement, puisque le câble présente schématiquement une coupe transversale circulaire, les bandes 4a, 4b, 4c et 4d sont enroulées autour de l'axe de symétrie du câble. Cette deuxième variante permet plus facilement, avec un minimum de bandes électriquement conductrices, et notamment avec uniquement deux bandes électriquement conductrices, de garantir une détection sur toute la surface externe de la gaine extérieure, de préférence lorsque la distance D ainsi que le pas d'enroulement des deux bandes électriquement conductrices sont faibles.
La figure 1c illustre une troisième variante des moyens de détection de ce premier mode de réalisation. Le câble représenté sur la figure 1c est identique à celui de la figure 1a excepté l'épaisseur de la gaine extérieure 3 qui n'est pas constante. En effet, la gaine extérieure 3 comporte des rainures longitudinales dans lesquelles sont intégrées ou incorporées les bandes 4a, 4b, 4c et 4d (bandes intégrées). Ainsi, l'épaisseur de la gaine extérieure en tant que telle n'est pas constante du fait de la présence des rainures.

En outre, on observe sur la figure 1c que l'association des bandes intégrées 4a, 4b, 4c et 4d avec la gaine extérieure 3 forme une gaine avec une épaisseur sensiblement constante.

Par ailleurs, les bandes intégrées 4a, 4b, 4c et 4d de la figure 1c peuvent également être enroulés (non représentées) autour de la gaine extérieure, comme le sont les bandes représentées sur la figure 1b.

Dans ce premier mode de réalisation, les bandes 4a, 4b, 4c et 4d peuvent être des matériaux choisis parmi des matériaux polymériques chargés, des matériaux métalliques ou en alliages de métaux, des vernis conducteurs, des encres conductrices, et des matériaux composites.

On préférera utiliser des matériaux polymériques chargés, qui peuvent être avantageusement extrudés en continue le long du câble sous forme de bandes conductrices en épaisseur fine.

Le matériau polymérique utilisé pour les bandes 4a, 4b, 4c et 4d est de même nature ou compatible avec le matériau (polymérique) de la surface externe 3a de la gaine extérieure pour faciliter leur adhésion.

Les bandes 4a, 4b, 4c et 4d des figures 1a et 1b sont extrudées indépendamment de l'étape d'extrusion de la gaine extérieure 3. Les bandes 4a, 4b, 4c et 4d de la figure 1c sont quant à elles extrudées concomitamment à la gaine extérieure 3 à travers la même filière d'une extrudeuse.

Bien entendu, dans le cas où l'on utilise des bandes métalliques par exemple, elles sont mises en place en sortie d'extrudeuse durant l'étape d'extrusion de la gaine extérieure.

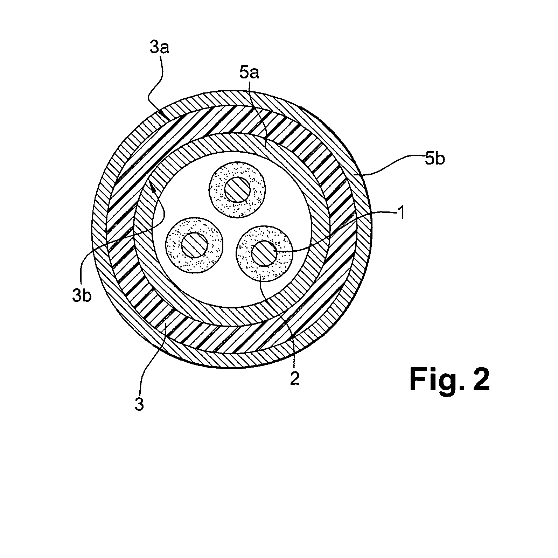

La figure 2 représente schématiquement un deuxième mode de réalisation des moyens de détection pour câble conforme à l'invention. Elle illustre un câble d'énergie comprenant trois conducteurs électriques 1 recouverts par une couche 2 électriquement isolante. L'ensemble de ces trois conducteurs électriquement isolés est entouré par une gaine extérieure 3 électriquement isolante.

Dans ce deuxième mode de réalisation, d'une part, une première couche 5a électriquement conductrice est positionnée directement en contact physique sur la surface interne 3b de la gaine extérieure 3, et d'autre part, une deuxième couche 5b électriquement conductrice est positionnée directement en contact physique sur la surface interne 3a de la gaine extérieure 3. Ainsi, les première et deuxième couches 5a, 5b conductrices recouvrent en continue respectivement les surfaces interne et externe de la gaine extérieure pour assurer la continuité de détection le long du câble. L'association de la première et de la deuxième couches électriquement conductrices de part et d'autre de la gaine extérieure 3 forme alors des moyens de détection conforme à l'invention.

Dans ce deuxième mode de réalisation, les premières et/ou deuxièmes couches 5a, 5b conductrices peuvent être des matériaux choisis indifféremment parmi des matériaux polymériques chargés, des matériaux métalliques ou en alliages de métaux, des vernis conducteurs, des encres conductrices, et des matériaux composites.

Plus particulièrement, la première couche conductrice est un matériau choisi parmi des matériaux polymériques chargés et des couches métalliques ou d'alliages de métaux.

Plus particulièrement, la deuxième couche conductrice est un matériau choisi parmi des matériaux polymériques chargés, des vernis conducteurs, des encres conductrices, et des matériaux composites.

On préféra utiliser des matériaux polymériques chargés pour la deuxième couche conductrice, comme pour la première couche conductrice, ces matériaux pouvant avantageusement être extrudés en continue le long du câble sous forme de tube en épaisseur fine.

On peut également utiliser des câbles d'énergie existants tels que ceux commercialisés par la société NEXANS sous la référence RHEYFLEX ou BUFLEX, dans lesquels la première couche conductrice est un composé respectivement du type ruban non tissé conducteur ou du type armure métallique (e.g. fils métalliques tressés ou guipés, ruban métallique, etc...). Il suffit alors d'ajouter la deuxième couche conductrice autour de la gaine extérieure de ces câbles. Pour ce faire, on peut par exemple sur une gaine extérieure PCV extruder une couche d'un matériau polymérique conducteur commercialisé par la société CLARIANT Masterbatches sous la référence WPVC 400283 / 56 LF.

Dans les exemples de réalisation mentionnés ci-avant, le type de conducteur, le nombre de conducteurs, la nature de l'isolation du ou desdits conducteurs, la nature de la gaine extérieure, la distance D entre chaque bande conductrice, la surface de recouvrement de chaque bande conductrice sur la surface externe de la gaine extérieure, et l'épaisseur des bandes et des couches conductrices ne sont nullement limitatifs dans le cadre de la présente invention.

En outre, la forme de la section transversale des câbles décrits précédemment n'est également pas limitative et peut être circulaire, méplat ou d'une forme adaptée à son utilisation.

Enfin, la gaine extérieure des câbles décrits précédemment peut être du type tubante ou bourrante, et le câble peut optionnellement comporter un matériau de bourrage, bien connu de l'homme du métier, entre la gaine extérieure et le ou les conducteurs.

## Revendications

1. Câble comprenant au moins un ou plusieurs conducteurs électriquement isolés entouré(s) par une gaine extérieure (3) électriquement isolante, et des moyens de détection comprenant au moins un premier et un deuxième éléments électriquement conducteurs (4a, 5a ; 4b, 5b), lesdits moyens de détection étant aptes à détecter la présence d'un corps électriquement conducteur extérieur au câble en contact avec les deux éléments électriquement conducteurs, **caractérisé en ce qu'**au moins le premier et le deuxième éléments électriquement conducteurs (4a, 4b) sont en contact avec la surface externe de la gaine extérieure (3).

2. Câble selon la revendication 1, **caractérisé en ce qu'**au moins le premier et le deuxième éléments électriquement conducteurs (4a, 4b) sont disposés sur la surface externe de la gaine extérieure (3) et s'étendent parallèlement le long du câble.

3. Câble selon la revendication 1 ou 2, **caractérisé en ce que** chacun des éléments électriquement conducteurs est une bande conductrice (4a, 4b,4c,4d).

4. Câble selon l'une quelconque des revendications 1 à 3, **caractérisé en ce que** les bandes conductrices s'étendent le long du câble, parallèlement à l'axe longitudinale du câble.

5. Câble selon l'une quelconque des revendications 1 à 3, **caractérisé en ce que** les bandes conductrices sont enroulées autour de la gaine extérieure le long du câble.

6. Dispositif de détection, **caractérisé en ce qu'**il comprend :
- un câble tel que défini aux revendications 1 à 5, et
- des moyens de mesure de résistance ohmique entre les au moins deux éléments électriquement conducteurs, lesdits moyens étant reliés aux éléments électriquement conducteurs.

## Patentansprüche

1. Kabel, das mindestens einen oder mehrere elektrisch isolierte Leiter umfasst, der/die mit einer elektrisch isolierenden äußeren Umhüllung (3) umwickelt ist/ sind, und Detektionsmittel, die mindestens ein erstes und ein zweites elektrisch leitendes Element (4a, 5a; 4b, 5b) umfassen, wobei die Detektionsmittel imstande sind, die Anwesenheit eines elektrisch leitenden Körpers außerhalb des Kabels im Kontakt mit den zwei elektrisch leitenden Elementen festzustellen, **dadurch gekennzeichnet, dass** mindestens das erste und das zweite elektrisch leitende Element (4a, 4b) mit der Außenfläche der äußeren Umhüllung (3) im Kontakt sind.

2. Kabel nach Anspruch 1, **dadurch gekennzeichnet, dass** mindestens das erste und das zweite elektrisch leitende Element (4a, 4b) auf der Außenfläche der äußeren Umhüllung (3) angeordnet sind und sich parallel entlang des Kabels erstrecken.

3. Kabel nach Anspruch 1 oder 2, **dadurch gekennzeichnet, dass** jedes der elektrisch leitenden Elemente ein leitendes Band (4a, 4b, 4c, 4d) ist.

4. Kabel nach einem der Ansprüche 1 bis 3, **dadurch gekennzeichnet, dass** sich die leitenden Bänder entlang des Kabels parallel zur Längsachse des Kabels erstrecken.

5. Kabel nach einem der Ansprüche 1 bis 3, **dadurch gekennzeichnet, dass** die leitenden Bänder um die äußere Umhüllung entlang des Kabels gewickelt sind.

6. Detektionsvorrichtung, **dadurch gekennzeichnet, dass** sie umfasst:
- ein Kabel, wie in den Ansprüchen 1 bis 5 definiert, und
- Messmittel des ohmschen Widerstands zwischen den mindestens zwei elektrisch leitenden Elementen, wobei die Mittel mit den elektrisch leitenden Elementen verbunden sind.

## Claims

1. A cable comprising at least one or more electrically insulated conductors surrounded by an electrically insulating outer sheath (3), and detection means comprising at least first and second electrically conducting elements (4a, 5a; 4b, 5b), said detection means being able to detect the presence of an electrically conducting body outside the cable in contact with the two electrically conducting elements, **characterized in that** at least the first and second electrically conducting elements (4a, 4b) are in contact with the outer surface of the outer sheath (3).

2. The cable according to claim 1, **characterized in that** at least the first and second electrically conducting elements (4a, 4b) are positioned on the outer surface of the outer sheath (3) and extend in parallel along the cable.

3. The cable according to claim 1 or 2, **characterized in that** each of the electrically conducting elements is a conductive strip (4a, 4b, 4c, 4d).

4. The cable according to any one of claims 1 to 3, **characterized in that** the conductive strips extend along the cable, parallel to the longitudinal axis of the cable.

5. The cable according to any one of claims 1 to 3, **characterized in that** the conductive strips are wound around the outer sheath along the cable.

6. A detection device, **characterized in that** it comprises:
- a cable as defined in claims 1 to 5, and
- means for measuring ohmic resistance between the at least two electrically conducting elements, said means being connected to the electrically conducting elements.
